# EUROPÄISCHE PATENTSCHRIFT

(11) **EP 2 210 698 B1**
(45) Veröffentlichungstag und Bekanntmachung des Hinweises auf die Patenterteilung: **09.11.2011**
(21) Anmeldenummer: 09170432.0
(22) Anmeldetag: 16.09.2009
(51) Int. Cl.: B23Q 1/00

(54) **Werkzeugmaschine**
Machine tool
Machine-outil

(30) Priorität: 22.01.2009 DE 202009000804 U
(43) Veröffentlichungstag der Anmeldung: 28.07.2010
(73) Patentinhaber: ELHA-Maschinenbau Liemke KG, 33161 Hövelhof (DE)
(72) Erfinder: Klösener Manfred, 33129 Delbrück (DE)
(74) Vertreter: Dantz, Jan Henning

(56) Entgegenhaltungen:
- EP-A1- 0 282 417
- EP-A1- 1 245 348
- DD-A1- 234 825
- FR-A1- 2 831 963
- US-A- 4 676 142
- US-A1- 2004 146 368

## Beschreibung

Die Erfindung betrifft eine Werkzeugmaschine nach dem Oberbegriff des Anspruchs 1.

Eine solche Werkzeugmaschine (EP 1 642 673A1) weist üblicherweise eine Vielzahl fest stehender, d.h. nicht translatorisch bewegbarer Werkzeuge auf, beispielsweise Bohrer oder Fräser, die mittels Spindeln lediglich rotieren. Dabei wird das an der Werkstückaufnahme befestigte Werkstück zu dem jeweiligen Werkzeug verfahren, wodurch sich eine bemerkenswert hohe Wirtschaftlichkeit ergibt, gegenüber einer solchen Werkzeugmaschine, bei der das Werkstück fest steht und die Werkzeuge in den Arbeitsbereich verfahrbar sind.

Um die Anzahl der Antriebe zu minimieren, können mehrere Spindeln jeweils in einem sogenannten Mehr-Spindelkopf zusammengefasst sein, die quasi als eine Baueinheit montiert sind.

Das Werkzeug ist bei einer Werkzeugmaschine mit lediglich einer Spindel mittels einer automatisch betätigbaren Spanneinrichtung im Werkzeughalter, d.h. in der zugeordneten Spindel gehalten, wobei die automatische Betätigung beispielsweise elektrisch, hydraulisch oder pneumatisch erfolgt. Die Spanneinrichtung ist üblicherweise als Hohlschaft-Kegel ausgebildet, da dadurch eine sehr gute Plananlage bei gleichzeitiger Zentrierung des Werkzeuges gewährleistet ist.

Insbesondere dann, wenn die Werkzeuge relativ häufig gewechselt werden müssen oder so schwer sind, dass sie aus arbeitsmedizinischen Gründen nicht mehr manuell angehoben bzw. getragen werden können, erfolgt die Betätigung der Spanneinrichtung, wie erwähnt, automatisch. Hierzu ist jede Spanneinrichtung über eine Zuleitung an eine Energiequelle angeschlossen, wobei die Zuleitung auf der dem Werkzeug abgewandten Seite durch die jeweilige Spindel gerührt wird.

Da die Spindeln rotieren, sind die Zuleitungen über Drehdurchführungen bzw. Schleifringe mit der entsprechenden Energiequelle verbunden.

Vor allem bei Mehr-Spindelköpfen ist aufgrund der vorhandenen Getriebe ein Durchleiten der Energie nur mit einem erheblichen konstruktiven und fertigungstechnischen Aufwand möglich und bei einer hohen Anzahl von Spindeln - bei einem Mehr-Spindelkopf bis zu 80 Stück - in einem wirtschaftlich sinnvollen Umfang nicht realisierbar.

In der US 2004/0146368 A1 ist ein sogenanntes antreibbares Werkzeug geoffenbart, in dem in einem Spannfutter ein hochtourig rotierendes Spanwerkzeug gehalten ist, wobei das Spannfutter über einen eigenen Pneumatik-Motor antreibbar ist. Dieses antreibbare Werkzeug ist als eine Baueinheit in eine Werkzeugaufnahme einer Werkzeugmaschine mittels eines Spannkegels einsetzbar und mit einer Druckluft-Zufuhr verbindbar.

Der Erfindung liegt die Aufgabe zugrunde, eine Werkzeugmaschine der gattungsgemäßen Art so weiterzuentwickeln, dass ein notwendiger Werkzeugwechsel mit konstruktiv geringem Aufwand und in kurzer Zeit möglich ist.

Diese Aufgabe wird durch eine Werkzeugmaschine mit den Merkmalen des Anspruchs 1 gelöst.

Durch diese konstruktive Ausbildung wird gegenüber dem Stand der Technik sowohl eine effizientere Handhabung beim Werkzeugwechsel wie auch eine kostengünstigere Herstellung der gesamten Werkzeugmaschine erreicht. Dies vor allem deshalb, da nun nicht mehr für jede Spanneinrichtung eine an eine Energiequelle angeschlossene Energiezuführung erforderlich ist, die überdies, wie beschrieben, durch die Spindel geführt werden müsste.

Vielmehr ist für alle Spanneinrichtungen sozusagen eine zentrale Energie-Bereitstellung gegeben, die erst dann zum Einsatz kommt, wenn sie bei einem notwendigen Werkzeugwechsel zum Lösen oder Spannen der Spannvorrichtung erforderlich ist.

Das zumindest eine am Werkzeughalter vorgesehene Kupplungselement kann in einfachster Form ausgebildet sein, beispielsweise als Steck- oder Schraubkupplung bei einem hydraulischen oder pneumatischen oder als Stecker oder Steckeraufnahme bei einem elektrischen Anschluss.

Bei einem Anlegen der Wechselstation an den Werkzeughalter wird das Kupplungselement des Werkzeughalters mit einem korrespondierenden Anschlusselement der Wechselstation in Eingriff gebracht, so dass die entsprechende Energieversorgung der Spannvorrichtung gewährleistet ist.

Gleichzeitig dient die Wechselstation der Aufnahme und dem Transport des zu wechselnden Werkzeuges, das vorzugsweise mittels Spannbacken zum Transport und zum Einsetzen in den Werkzeughalter gehalten ist.

Die Spannbacken können ebenfalls elektrisch, hydraulisch, pneumatisch oder auf vergleichbare Weise automatisch betätigt werden.

Die Wechselstation ist Bestandteil eines manuell zu bedienenden Manipulators oder eines Roboters, mit dem ein vollautomatischer Werkzeugwechsel, bevorzugt programmgesteuert, durchführbar ist.

Unabhängig von der Anzahl in einer Werkzeugmaschine vorhandener Spindeln bzw. Werkzeuge reicht prinzipiell eine Wechselstation aus, wobei die den jeweiligen Werkzeughaltern zugeordneten Kupplungselemente standardisiert sind, so dass die daran angekoppelten Anschlusselemente der Wechselstation mit jedem Kupplungselement korrespondieren können.

Nach einer vorteilhaften Weiterbildung der Erfindung ist vorgesehen, dass die Kupplungselemente im Bereich der Vorderseite des Werkzeughalters, also im Bereich der Beschickungsseite, angeordnet sind, wodurch eine automatische Ankoppelung problemlos möglich ist.

Neben einem Werkzeugwechsel kann die Wechselstation auch für einen Werkstückwechsel eingesetzt werden, wozu ggf. die Spannbacken entsprechend zu modifizieren sind.

Als separates Teil kann die Wechselstation extern, also außerhalb der Werkzeugmaschine angeschlossen und an einem Tragann gehalten sein, der in die jeweilige Position verschwenk- bzw. verfahrbar ist. Denkbar ist aber auch, die Wechselstation zusammen mit dem genannten Tragarm in die Werkzeugmaschine an geeigneter Stelle zu integrieren. In diesem Fall wird die Wechselstation nur zum Beschicken dieser Werkzeugmaschine zum Einsatz kommen, während bei einer externen Anordnung durchaus mehrere Werkzeugmaschinen, die dann zweckmäßigerweise unmittelbar benachbart positioniert sind, bedient werden können.

Insbesondere bei einem Einsatz schwerer Werkzeuge, die von einer Person nicht mehr allein handhabbar sind, bietet die Erfindung erhebliche Handhabungsvorteile.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Teil einer Werkzeugmaschine in einer perspektivischen An- sicht
- Figuren 2 und 3: eine Wechselstation gemäß der Erfindung, gleichfalls jeweils in einer perspektivischen Darstellung.

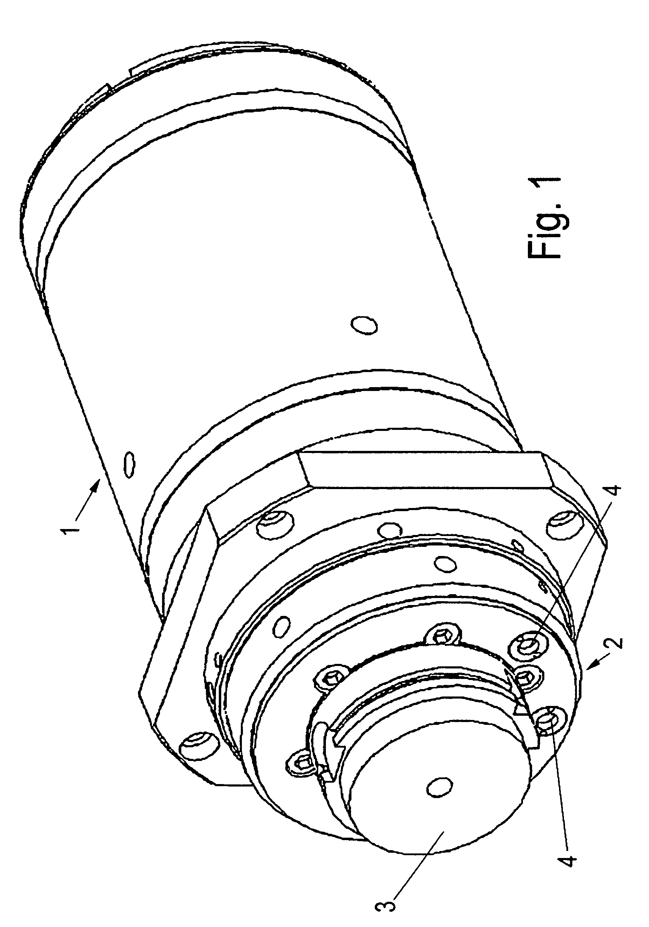

In der Figur 1 ist ein Werkzeughalter 2 einer Werkzeugmaschine dargestellt, der ein über eine Spindel 1 rotierend antreibbares Werkzeug 3 trägt. Dabei ist das Werkzeug 3 fest stehend, d.h. in keine translatorische Richtung verfahrbar, während ein nicht dargestelltes, in einer Werkstückaufiiahme gehaltenes Werkstück relativ zum Werkzeug 3 bewegbar ist, wodurch das Werkzeug 3 in Eingriff kommt und das Werkstück bearbeitet wird.

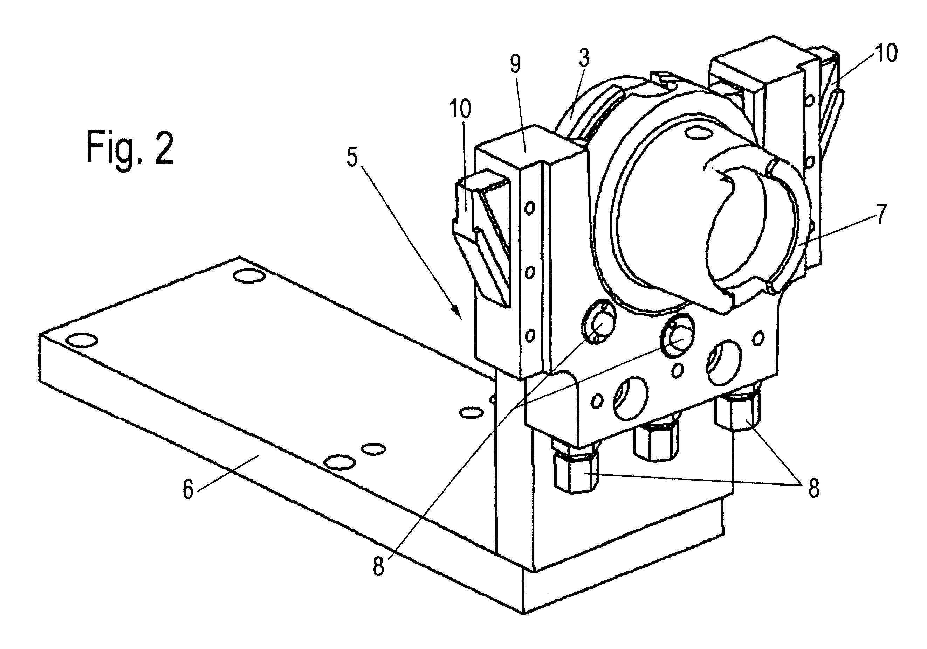

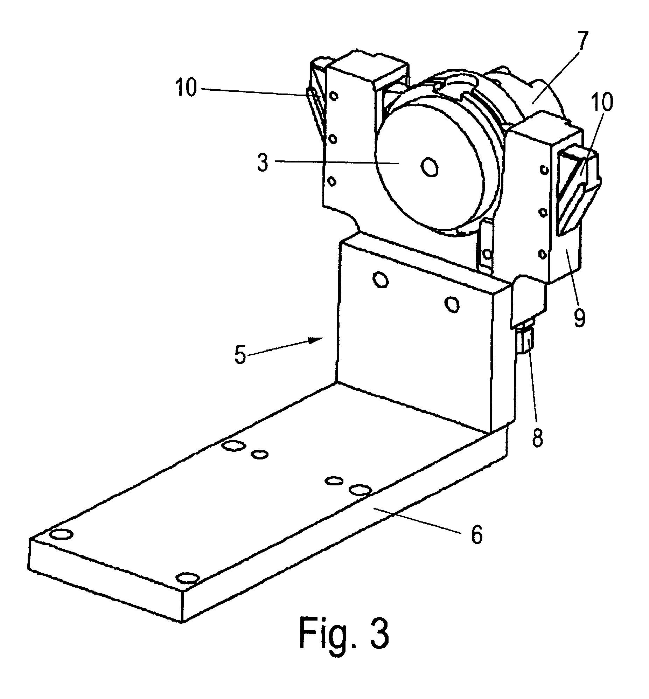

Erfindungsgemäß weist der Werkzeughalter 2 Kupplungselemente 4 auf, die im vorliegenden Beispiel an der dem Werkzeug 3 zugewandten Stirnseite des Werkzeughalters 2 angeordnet sind und an die eine in den Figuren 2 und 3 dargestellte Wechselstation 5 ankoppelbar ist.

Hierzu weist die Wechselstation 5 Anschlüsse 8 auf, die an eine Energiequelle, beispielsweise ein Hydraulik- oder Pneumatikaggregat oder an eine Stromquelle anschließbar sind.

Mittels der Kupplungselemente 4 und der damit korrespondierenden Anschlüsse 8 wird Energie zu einer im Werkzeughalter 2 angeordneten Spanneinrichtung übertragen, mit der das Werkzeug 3 im Werkzeughalter 2 einspannbar ist. Dies kann, wie im Beispiel, mittels eines am Werkzeug 3 angeschlossenen Hohlspannkegel 7 erfolgen, der mit der daran angepassten Spanneinrichtung in Eingriff bringbar ist.

Die in den Figuren 2 und 3 erkennbare Wechselstation 5 ist gegenüber dem Werkzeughalter 2 bzw. der Spindel 1 so bewegbar, dass sie zur Beschickung mehrerer Werkzeughalter 2 einsetzbar ist, wobei jeweils die Energieübertragung zum Lösen und Spannen des Werkzeuges 3 in der Spanneinrichtung ausschließlich über die Anschlüsse 8 und die Kupplungselemente 4 erfolgt.

Die Wechselstation 5 weist einen Spannflansch 9 auf, in dem Spannbacken 10 gelagert sind, mittels derer das zu wechselnde Werkzeug 3 zum Transport bzw. zum Einsetzen in den Werkzeughalter 2 fest gehalten wird.

Der Spannflansch 9 ist an einem Halter 6 befestigt, der wiederum mit einem manuell zu bedienenden Manipulator verbunden sein kann oder mit einem Roboter, mit dem dann ein automatischer Werkzeugwechsel möglich ist, der ein Entnehmen des Werkzeuges 3 aus dem Werkzeughalter 2, ein Ablegen des Werkzeugs 3 in ein Magazin, ein Aufnehmen eines neuen Werkzeugs 3 aus dem Magazin sowie ein Einsetzen des neuen Werkzeugs 3 in den Werkzeughalter 2 umfasst.

## Patentansprüche

1. Werkzeugmaschine, mit mindestens einem fest stehenden, antreibbaren Werkzeug (3) und einer relativ dazu bewegbaren Werkstückaufnahme, wobei das Werkzeug (3) in einen Werkzeughalter (2) eingesteckt und darin mittels einer automatisch betätigbaren Spanneinrichtung gehalten ist, **dadurch gekennzeichnet, dass** die Werkzeugmaschine eine separate Wechselstation (5) aufweist, die an eine Energiequelle angeschlossen ist, und dass der Werkzeughalter (2) zumindest ein mit der Spanneinrichtung in Wirkverbindung stehendes Kupplungselement (4) aufweist, an das zum Werkzeugwechsel die separate Wechselstation (5) energieübertragend lösbar angekoppelt ist.

2. Werkzeugmaschine nach Anspruch 1, **dadurch gekennzeichnet, dass** die Wechselstation (5) integraler Bestandteil der Werkzeugmaschine ist.

3. Werkzeugmaschine nach Anspruch 1 oder 2, **dadurch gekennzeichnet, dass** die Wechselstation (5) an die Energiequelle angeschlossene Anschlüsse (8) aufweist, die mit den Kupplungselementen (4) korrespondieren.

4. Werkzeugmaschine nach einem der vorhergehenden Ansprüche, **dadurch gekennzeichnet, dass** die Wechselstation (5) an einem manuell zu bedienenden Manipulator befestigt ist.

5. Werkzeugmaschine nach einem der vorhergehenden Ansprüche, **dadurch gekennzeichnet, dass** die Wechselstation (5) an einem Roboter befestigt ist.

6. Werkzeugmaschine nach einem der vorhergehenden Ansprüche, **dadurch gekennzeichnet, dass** die Wechselstation (5) eine Spanneinheit aufweist, zum Halten des Werkzeugs (3) beim Werkzeugwechsel.

7. Werkzeugmaschine nach einem der vorhergehenden Ansprüche, **dadurch gekennzeichnet, dass** die Spanneinheit aus einem Spannflansch (9) besteht, in dem Spannbacken (10) vorgesehen sind.

8. Werkzeugmaschine nach einem der vorhergehenden Ansprüche, **dadurch gekennzeichnet, dass** die Kupplungselemente (4) auf der dem Werkzeug (3) zugewandten Vorderseite des Werkzeughalters (2) angeordnet sind.

9. Werkzeugmaschine nach einem der vorhergehenden Ansprüche, **dadurch gekennzeichnet, dass** die Kupplungselemente (4) und die Anschlüsse (8) als Steck- oder Schraubkupplung ausgebildet sind.

10. Werkzeugmaschine nach einem der vorhergehenden Ansprüche, **dadurch gekennzeichnet, dass** die Spanneinrichtung elektrisch, hydraulisch oder pneumatisch betätigbar ist.

## Claims

1. Machine tool, comprising at least one fixed, drivable tool (3) and a workholding fixture movable relative thereto, the tool (3) being inserted into a tool holder (2) and being held therein by means of a clamping device which can be actuated automatically, **characterized in that** the machine tool has a separate change station (5) which is connected to an energy source, and **in that** the tool holder (2) has at least one coupling element (4) which is operatively connected to the clamping device and to which the separate change station (5) can be detachably coupled in an energy-transmitting manner for the tool change.

2. Machine tool according to Claim 1, **characterized in that** the change station (5) is an integral part of the machine tool.

3. Machine tool according to Claim 1 or 2, **characterized in that** the change station (5) has connections (8) which are connected to the energy source and correspond with the coupling elements (4).

4. Machine tool according to one of the preceding claims, **characterized in that** the change station (5) is fastened to a manipulator which can be operated manually.

5. Machine tool according to one of the preceding claims, **characterized in that** the change station (5) is fastened to a robot.

6. Machine tool according to one of the preceding claims, **characterized in that** the change station (5) has a clamping unit for holding the tool (3) during the tool change.

7. Machine tool according to one of the preceding claims, **characterized in that** the clamping unit consists of a clamping flange (9) in which clamping jaws (10) are provided.

8. Machine tool according to one of the preceding claims, **characterized in that** the coupling elements (4) are arranged on the front side, facing the tool (3), of the tool holder (2).

9. Machine tool according to one of the preceding claims, **characterized in that** the coupling elements (4) and the connections (8) are designed as a plug-in or screw coupling.

10. Machine tool according to one of the preceding claims, **characterized in that** the clamping device can be actuated electrically, hydraulically or pneumatically.

## Revendications

1. Machine-outil présentant au moins un outil (3) fixe, pouvant être entraîné et un logement de pièce mobile par rapport à celui-ci, l'outil (3) étant inséré dans un porte-outil (2) et maintenu dedans à l'aide d'un dispositif de serrage pouvant être actionné automatiquement, **caractérisée en ce que** la machine-outil présente un poste de changement séparé (5) qui est raccordé à une source d'énergie, et **en ce que** le porte-outil (2) présente au moins un élément de couplage (4) en liaison active avec le dispositif de serrage, auquel élément le poste de changement séparé (5) est couplé de manière amovible pour le changement d'outil de sorte à transmettre l'énergie.

2. Machine-outil selon la revendication 1, **caractérisée en ce que** le poste de changement (5) fait partie intégrante de la machine-outil.

3. Machine-outil selon la revendication 1 ou 2, **caractérisée en ce que** le poste de changement (5) présente des raccords (8) raccordés à la source d'énergie, correspondant aux éléments de couplage (4).

4. Machine-outil selon l'une quelconque des revendications précédentes, **caractérisée en ce que** le poste de changement (5) est fixé sur un manipulateur à manier manuellement.

5. Machine-outil selon l'une quelconque des revendications précédentes, **caractérisée en ce que** le poste de changement (5) est fixé à un robot.

6. Machine-outil selon l'une quelconque des revendications précédentes, **caractérisée en ce que** le poste de changement (5) présente une unité de serrage pour le maintien de l'outil (3) lors du changement d'outil.

7. Machine-outil selon l'une quelconque des revendications précédentes, **caractérisée en ce que** l'unité de serrage se compose d'une bride de serrage (9), dans laquelle sont prévues des mâchoires de serrage (10).

8. Machine-outil selon l'une quelconque des revendications précédentes, **caractérisée en ce que** les éléments de couplage (4) sont disposés sur le côté avant, tourné vers l'outil (3), du porte-outil (2).

9. Machine-outil selon l'une quelconque des revendications précédentes, **caractérisée en ce que** les éléments de couplage (4) et les raccords (8) sont réalisés comme un couplage par enfichage ou vissage.

10. Machine-outil selon l'une quelconque des revendications précédentes, **caractérisée en ce que** le dispositif de serrage peut être actionné par voie électrique, hydraulique ou pneumatique.
